# EUROPEAN PATENT SPECIFICATION

(11) **EP 4 145 315 B1**
(45) Date of publication and mention of the grant of the patent: **09.12.2026**
(21) Application number: 22191130.8
(22) Date of filing: 19.08.2022
(51) Int. Cl.: G06F 21/53

(54) **SYSTEM AND METHOD FOR MODIFYING AN ISOLATED EXECUTION ENVIRONMENT**
SYSTEM UND VERFAHREN ZUM MODIFIZIEREN EINER ISOLIERTEN AUSFÜHRUNGSUMGEBUNG
SYSTÈME ET PROCÉDÉ DE MODIFICATION D'UN ENVIRONNEMENT D'EXÉCUTION ISOLÉ

(30) Priority: 06.09.2021 RU 2021126174; 17.05.2022 US 202217746146
(43) Date of publication of application: 08.03.2023
(73) Proprietor: AO Kaspersky Lab, Moscow 125212 (RU)
(72) Inventor: LISKIN, Alexander V., MOSCOW 125212 (RU); BUTUZOV, Vitaly V., MOSCOW 125212 (RU)
(74) Representative: Chimini, Francesco

(56) References cited:
- RU-C1- 2 748 518
- US-A1- 2008 016 339
- US-A1- 2013 139 264

## Description

### FIELD OF TECHNOLOGY

The present disclosure relates to the field of information security, e.g., by modifying execution environments of applications.

### BACKGROUND

The rapid development of computer technologies in the last decade and the widespread adoption of computer systems (personal computers, laptops, tablets, smartphones, etc.) have become a powerful incentive to use these devices in a variety of areas of activity and to perform a vast number of tasks (from internet surfing to bank transfers and electronic document exchange). In parallel with the growth in the number of computer systems and software, the number of malicious programs is also growing rapidly.

At present, there are a huge number of malicious programs in circulation. Some of these steal personal and sensitive data from users' devices (such as logins and passwords, bank details, electronic documents, etc.). Others use the devices of users to create so-called botnets, which are used to organize attacks on a third-party computer system, the purpose of these attacks being to cause a denial of service (DDoS - Distributed Denial of Service) or search for passwords using brute force methods. Third parties offer paid content to users through intrusive advertising, sending SMS messages to premium numbers, etc.

Applications that contain malicious code are detected using a variety of technologies and techniques, such as static analysis, behavioral analysis, analysis and comparison of databases of trusted applications, databases of malicious code applications, application emulation, and so on.

One approach is using a sandbox, which is a dedicated environment for secure execution of computer programs (emulation). Typically, it is a strictly controlled set of resources for executing the application under analysis, for example, disk or memory space. Network access, the ability to interact with the host operating system or to read information from input devices are usually either partially emulated or severely restricted. However, a problem related to the selection of the emulation environment may arise, because not all the dedicated execution environments allow a given application to run. In addition, difficulties arise in emulating exactly the resources needed to analyze the application fully and securely. While there are ways to manually select sandboxes, the manual approach does not allow the selection for an unknown application because of the danger of malicious applications. Examples of such approach are disclosed in the following documents: US 2008/016339 A1, US 2013/139264 A1 and RU 2 748 518 C1.

Therefore, there is a need for a method and a system for improving selection of an emulation environment.

### SUMMARY

Aspects of the disclosure relate to information security, more specifically, to systems and methods of modifying execution environments of applications. For example, the method of the present disclosure is designed to generate or modify isolated execution environments for launching, executing, and checking an application for the presence of malicious code.

In one example, a method is provided for modifying execution environments of applications, the method comprising: identifying an application that requires an isolated execution environment in order to be analyzed, generating an isolated execution environment to launch the identified application using constraint generating rules from a rules database, launching the application in the isolated execution environment that was generated, when an incorrect execution of the application is detected after the application is launched in the isolated execution environment, stopping the execution of the application and modifying the isolated execution environment using the constraint generating rules from the rule database, and when an incorrect execution of the application is not detected after the application is launched in the isolated execution environment, checking for a presence of a malicious code in the application running in the modified isolated execution environment.

In one example, the application that requires the isolated execution environment in order to be analyzed is an application that is partly encrypted and on which the check for the presence of malicious code is performed.

**In** one example, the application that requires the isolated execution environment in order to be analyzed is an application that is partially obfuscated and on which the check for the presence of malicious code is performed.

In one example, the isolated execution environment for launching the identified application is generated by identifying the conditions for launching the application.

In one example, the isolated execution environment for launching the identified application is generated by generating a set of constraints based on the identified conditions for launching applications using the constraint generation rules.In one example, the isolated execution environment for launching the identified application is generated by generating an isolated execution environment based on the set of constraints generated.

In one example, the generated isolated execution environment is modified when incorrect execution of the application is detected, by identifying the conditions for the correct execution of the identified application.

In one example, the generated isolated execution environment is modified when incorrect execution of the application is detected, by modifying the generated set of constraints based on the identified conditions for the correct execution of the identified application and the constraint generation rules.

In one example, the generated isolated execution environment is modified when incorrect execution of the application is detected, by creating an isolated execution environment based on the modified set of constraints.

In one example, a system is provided for modifying execution environments of applications, the system comprising a hardware processor configured to identify an application that requires an isolated execution environment in order to be analyzed, generate an isolated execution environment to launch the identified application using constraint generating rules from a rules database, launch the application in the isolated execution environment that was generated, when an incorrect execution of the application is detected after the application is launched in the isolated execution environment, stop the execution of the application and modify the isolated execution environment using the constraint generating rules from the rule database, and when an incorrect execution of the application is not detected after the application is launched in the isolated execution environment, check for a presence of a malicious code in the application running in the modified isolated execution environment.

The method and system of the present disclosure are designed to provide information security, in a more optimal and effective manner, ensure that an application running in a modified isolated execution environment can be checked for the presence of malicious code. This technical result is achieved by generating and modifying the execution environment according to the restrictions.

### BRIEF DESCRIPTION OF THE DRAWINGS

The accompanying drawings, which are incorporated into and constitute a part of this specification, illustrate one or more example embodiments of the present invention and, together with the detailed description, serve to explain their principles and implementations.
**Fig. 1** illustrates a block diagram of an exemplary system for modifying execution environments of applications.
**Fig. 2** illustrates an exemplary method for modifying execution environments of applications.
**Fig.** 3 presents an example of a general purpose computer system on which systems and methods of the present invention can be implemented.

### DETAILED DESCRIPTION

Exemplary embodiments of the invention are described herein in the context of a system and method for modifying execution environments of applications. Those of ordinary skill in the art will realize that the following description is illustrative only and is not intended to be in any way limiting. Other embodiments will readily suggest themselves to those skilled in the art having the benefit of the disclosure. Reference will now be made in detail to implementations of the example embodiments as illustrated in the accompanying drawings. The same reference indicators will be used to the extent possible throughout the drawings and the following description to refer to the same or like items.

The following terminologies are provided in order to clearly present the teachings of the present disclosure.

Emulation refers to an exact execution of a computer program or parts of it by a computer, written in the command system of another computer. The results must be the same on both computers for the same input data. Emulation is carried out by means of emulators - special programs or microcircuits which execute each command of the source program by means of one or more commands of the machine on which the emulation takes place.

Emulators provide some level of compatibility to translate system calls of the emulated system into calls of the running system. Typically, an emulator consists of several modules that are responsible for the different subsystems of the emulated computer. In most cases, the emulator consists of:
- an emulator or simulator of the CPU;
- a memory subsystem module that emulates RAM and ROM; and
- a module or modules for emulating various input/output devices.

The system bus is usually not emulated for reasons of simplification or performance improvement, but a virtual peripheral accesses the CPU module and memory module directly.

Virtualization refers to a provision of a set of computing resources or logical combination thereof, abstracted from the hardware implementation, while providing logical isolation of computing processes running on a single physical resource. Virtualization is a method of hiding the physical characteristics of computer resources from the techniques with which other systems, applications, or users use these resources. There are two basic versions of this method, one of which involves dividing any single physical resource (server, operating system, application, or data storage system) into a set of logical resources, and the other involves a set of physical resources integrated into a single logical resource.

In general, virtualization refers to a process in which a computer is presented to a user of a virtualized operating system by another computer, or else when one computer appears as multiple computers, each with its own operating system. Some example may be found in literature, e.g.,
(http://shgpi.edu.ru/files/nauka/vestnik/2015/2015-1-25.pdf (date accessed: 06.06.2021)).

An isolated execution environment (sandbox) refers to a dedicated environment for the secure execution of computer programs that takes the form of a strictly controlled set of execution resources, such as disk or memory space, network access, the ability to interact with the host operating system or read information from input devices, etc. Some example may be found in literature, e.g.,
(https://engineering.pnzgu.ru/files/engineering.pnzgu.ru/iit_2019_vol_4_1_12(3).pdf (date accessed: 06.06.2021)).

The isolated execution environment is created and implemented using emulation and virtualization methods.

Obfuscated refers to a program that generates the same result as the original program for all allowed input data for the source program, but is more difficult to analyze, understand and modify. The obfuscated program is obtained by applying obfuscating transformations to the original unobfuscated program (A.V. Chernov. An integrated environment for analyzing "obfuscation" of software. Report at the conference dedicated to the 90th anniversary of the birth of A.A. Lyapunov. Russia, Novosibirsk, October 8-11, 2001).

One method of analyzing applications for the presence of malicious code is to use a specially prepared, isolated execution environment when running the application to be analyzed. The environment includes tools and interfaces for tracking and analyzing application requests to resources in the environment. The analysis results will determine whether the application being run is malicious without causing real damage to the user data and resources of the computer system. The process of analyzing application resource requests in the environment is divided into two stages. The first stage involves ensuring that the application will launch. This step extracts and analyzes information that describes the conditions under which the application to be analyzed is able to run. The second step involves ensuring the correct execution of the application. At this stage, the process extracts and analyzes information that describes the conditions under which the application to be analyzed can be executed in a stable manner until it is closed by the user. Changing the parameters of the isolated execution environment in a timely manner allows the application to be launched and executed while performing a check for malicious code in the isolated execution environment. This is achieved using a system for modifying the limited execution environment for launching, executing, and checking an application for the presence of malicious code.

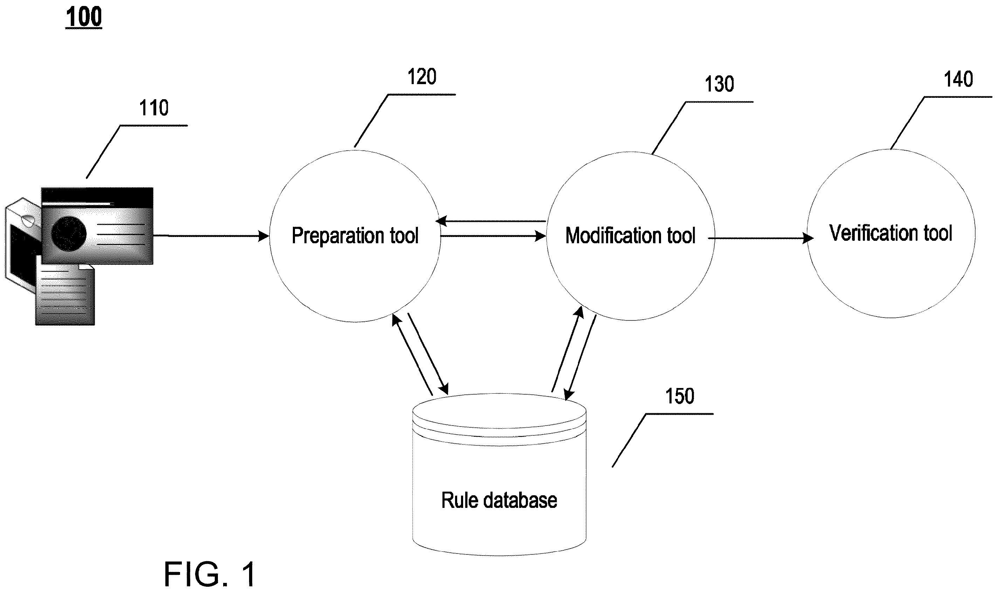

**Fig. 1** a block diagram of an exemplary system **100** for modifying execution environments of applications. The modification is performed for safely launching the application, which includes a preparation tool 120, a modification tool 130, a verification tool 140, and a rule database 150.

The preparation tool **120** is designed to identify the application which requires an isolated execution environment in order to be analyzed.

There are many applications **110** that may be skipped or simplified when scanned using standard antivirus tools, or may be simply impossible to scan under current conditions. Among this set of applications, the preparation tool **120** selects those applications that require an isolated execution environment for their analysis.

In one example, the preparation tool **120** identifies applications that are partially encrypted and cannot be decrypted at this time. Many secure applications may have an encrypted part. This allows companies to protect their rights and hide valuable information. At the same time, the applications in the encrypted part may also have malicious functionality.

In another example, the preparation tool **120** determines the degree of obfuscation of the application. Applications that show no signs of obfuscation generally do not need to be verified using any execution environment at all. Applications that show signs of obfuscation may be divided into two groups: significantly obfuscated (for example, more than 80 percent) and mildly obfuscated (for example, less than 20 percent). The significantly obfuscated group most commonly includes malicious applications that are created according to a similar pattern, but obfuscated by different methods. Mildly obfuscated applications are most commonly malicious applications disguised as trusted ones. These applications are considered to be applications requiring an isolated execution environment for their analysis. The noted requirement relates to the importance of launching a mildly obfuscated application in order to analyze precisely which additional functionality the obfuscated part contains.

In another example, applications that require an isolated execution environment for their analysis can be marked directly by an antivirus program or a virus analysis tool.

In addition, the preparation tool **120** is designed to create an isolated execution environment for running the identified application using rules for generating constraints.

The preparation tool **120** identifies the conditions for launching the application by analyzing the parameters of the application's features and resources. Conditions for launching are understood to mean the resources or parameters of an application that are necessary to launch it in a given execution environment.

Examples of these conditions are the following:
- Presence of a function from a linked library 1 in the import tables.
- Presence of a command line parameter 1. Each application launched can receive a list of arguments that the user or the launching application creates (application_filepath: parameter1 parameter2, etc.)
- Presence of time or time zone values. If the time is in the required range, the application can be executed. The system localization can be checked, the application can only be run in certain countries.
- Presence of a file 1. The application to be launched can check whether the file 1 is in the application directory or any system directory.
- Availability of space in RAM memory 1. The application to be launched checks for a certain amount of RAM in the operating system.
- Availability of space in ROM memory 1. The application to be launched checks for a certain amount of memory on the hard drive by writing or creating a large file.
- Presence of a device driver 1 (name, serial number). The application to be launched checks for an installed device, such as a video processor for cryptocurrency mining, etc.

Next, the preparation tool **120** generates a set of constraints for the execution environment sufficient to launch the application based on the identified conditions, using the constraint generating rules from the rule database **150.** The constraint set contains execution environment settings that are sufficient to launch the application.

A constraint generating rule is understood to mean a change in the settings and characteristics of the execution environment that restrict its operation according to the conditions identified.

According to the constraint generating rule, the condition for launching the identified application "presence of linked library 1 in import tables" will be implemented as the constraint "presence of library 1 and associated libraries 2, 3, but no more, where access to library 1 will be provided through an intermediate agent or tool". Accordingly, this constraint will be incorporated into the isolated execution environment. The preparation tool **120** uses constraint generating rules to process each launch condition and generate a set of constraints. Using the generated set of constraints, the preparation tool **120** generates the isolated execution environment.

In one example, the preparation tool **120** generates the isolated execution environment by searching for available execution environments in accordance with the generated set of constraints. Since the creation of a new execution environment is a resource-intensive process, virus analysis tools often store the generated execution environment created when checking previous applications and use it to analyze unknown applications afterwards.

In another example, the preparation tool **120** generates the isolated execution environment by searching for the most suitable execution environments and revising their constraints according to the set of constraints generated. For example, when two of the three constraints are incorporated in the most suitable execution environment.

In addition, the preparation tool **120** is designed to transfer data about the identified application and the generated isolated execution environment to the modification tool **130.** The modification tool **130** is designed to launch the application in the generated isolated execution environment in order to modify the specified environment further.

Once the application has been correctly launched in the isolated execution environment, it transfers to the execution state. In this state, the application may request additional resources, data, files, services, or devices. It is common to find cases where the implementation of the conditions for launching the application identified in the previous steps is not sufficient to execute the identified application correctly. In this case, the application may terminate with an error, stop responding to the system, begin to restart on its own, and so on. The modification tool **130** identifies the conditions for the correct execution of the application after launching by analyzing the application activity, its parameters, and the resources used in the current isolated execution environment, using the reverse engineering method, for example. The conditions for correct execution are understood to mean the resources or parameters of an application that become necessary after the application is launched in the given execution environment.

Examples of these conditions are the following:
- The presence of a parameter or registry string of the operating system 1. An application that is running can check for strings in the registry in the operating system or another source in the form of a log containing a list of settings. The presence and contents of predefined registry files and keys are checked. If their content is not consistent with the application, the execution is stopped.
- Access to a network resource 1. An application that is running can verify that it has access to a network resource. If its content or the response received to the request is not consistent with the application, the execution is stopped.
- Additional period of time for the execution 1. An application that is running may not show any signs of activity until a certain period of time has elapsed.
- A user action 1 has been performed. An application that is running may not show any signs of activity until the user has performed an action or sequence of actions.

Further, the modification tool **130** is designed to modify the isolated execution environment created if incorrect execution of the application is detected. The modification tool **130** modifies the set of constraints by processing each condition for the correct execution of the application using the constraint generation rules from the rule database **150.** For example, according to a constraint generation rule, the condition on correct application execution "access to the network resource 1" will be implemented as the constraint "presence of a network card 1 and an installed driver, presence of an OS service that can provide access to network resources, presence of a remote server simulating the network resource 1, but no more, wherein the network resource 1 will be accessed via an intermediate agent or tool". Accordingly, this constraint will be incorporated into the isolated execution environment.

The modification tool **130** then modifies the isolated execution environment based on the modified set of constraints and launches the application, but already in the modified isolated execution environment.

In addition, the modification tool **130** is designed to transfer data about the identified application and the modified isolated execution environment to the verification tool **140.**

The verification tool **140** is designed to check for the presence of malicious code in an application that runs in the modified isolated execution environment. This check can be performed using antivirus software or some of its individual modules.

In the event that the obfuscated part contains malicious functionality that becomes active after launch, the application will be considered malicious, which will improve the effectiveness of the antivirus scanning. In the event that the obfuscated part does not contain malicious functionality, the application will be considered neutral or safe, which will also improve the effectiveness of the antivirus scanning.

The rule database **150** is designed to store the constraint generating rules. Various types of databases can be used for data storage and processing, namely hierarchical (IMS, TDMS, System 2000), network-based (Cerebrum, Cronospro, DBVist), relational (DB2, Informix, Microsoft SQL Server), object-oriented (Jasmine, Versant, POET), object-relational (Oracle Database, PostgreSQL, FirstSQL/J, functional, etc. The rules can be created using machine learning algorithms and automated processing of large-scale data sets.

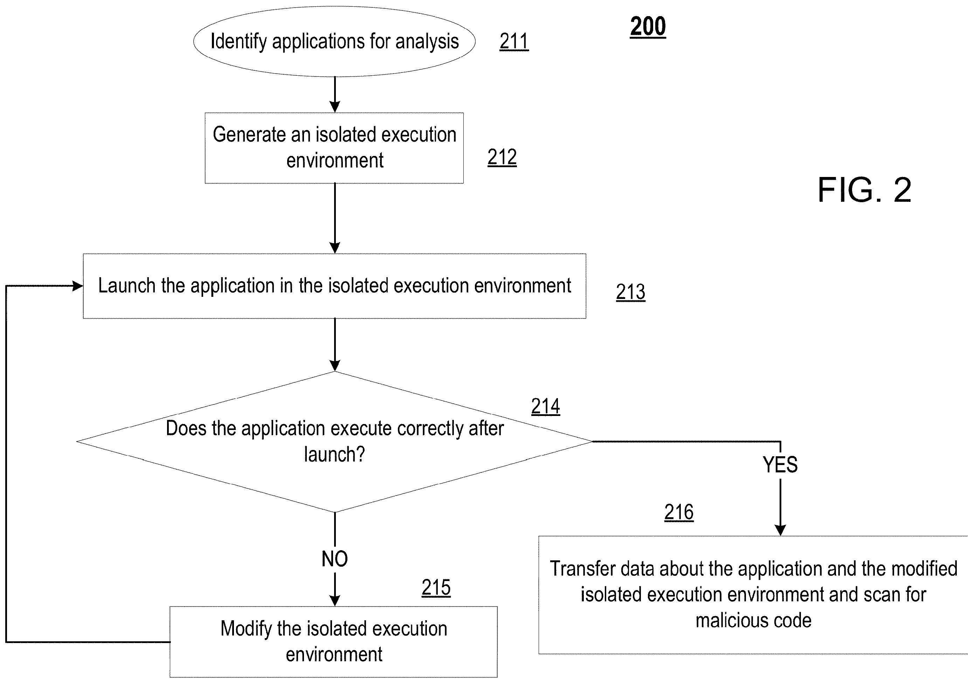

**Fig. 2** illustrates an exemplary method **200** for modifying execution environments of applications.

In step **211,** by the preparation tool **120,** method **200** identifies an application that requires an isolated execution environment in order to be analyzed.

In step **212,** by the preparation tool **120,** method **200** generates an isolated execution environment to launch the identified application. The isolated execution environment is generated using the constraint generating rules from the rule database **150.** The preparation tool **120** then transfers data about the identified application and the generated isolated environment to the modification tool **130.**

In step **213,** by the modification tool **130,** method **200** launches the application in the isolated execution environment that was generated.

In step **214,** by the modification tool **130,** method **200** checks to determine whether the application is executing correctly after it is launched in the isolated execution environment created.

In step **215,** by the modification tool **130,** when an incorrect execution of the application is detected, method **200** stops the execution of the application and modifies the isolated execution environment using the constraint generating rules from the rule database **150.** The method then returns to step **213** to continue processing. If the application is being executed correctly, method **200** proceeds to step **216.**

In step **216,** by the modification tool **130,** method **200** transfers data about the application and the modified isolated execution environment to the verification tool **140,** and by the verification tool **140,** method **200** checks for a presence of malicious code in the application running in the modified isolated execution environment. The system then shuts down.

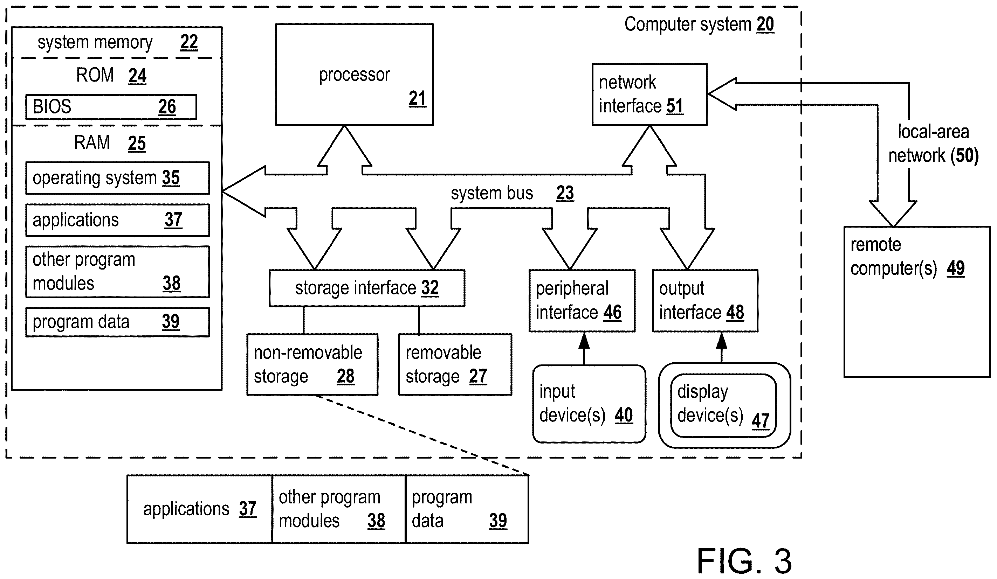

**Fig. 3** is a block diagram illustrating a computer system 20 on which examples of systems and methods for modifying execution environments of applications may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Systems and methods disclosed herein may be implemented as computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in Fig. 3, above). Accordingly, each module may be realized in a variety of suitable configurations, and should not be limited to any particular implementation exemplified herein.

In the interest of clarity, not all of the routine features of the systems and methods are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method (200) for modifying isolated application execution environments, the method comprising:
identifying (211) an at least partially encrypted and/or at least partially obfuscated application;
analyzing parameters and resources of the application to determine conditions for launching the application, wherein the conditions include resources or parameters of the application that are necessary to launch the application in an isolated application execution environment;
generating (212), based on the determined conditions, a set of constraints for the an isolated application execution environment using constraint generating rules from a rules database, the constraint generating rules comprising changes in settings and/or characteristics of the isolated application execution environment that restrict operations according to the determined conditions;
searching for an isolated application execution environment that most closely matches the generated set of constraints among previously created isolated application execution environments;
launching (213) the application in the matched isolated application execution environment;
determining if the application executes incorrectly in the isolated application execution environment due to the determined conditions being insufficient for launching the application;
based on a determination that the application executes incorrectly, stopping (215) the execution of the application;
analyzing the application's activity, parameters, and/or resources to identify the conditions for the correct execution of the application;
modifying the set of constraints of the isolated application execution environment based on the identified conditions for correct execution to facilitate correct execution of the application; and
re-launching (213) the application in the modified isolated application execution environment;
checking (216) at least the encrypted part and/or at least the obfuscated part of the application for a presence of a malicious code in the modified isolated application execution environment.

2. The method according to claim 1, wherein incorrect execution of the application includes: application terminates with an error, application stops responding to the system, and/or application begins to restart on its own.

3. The method according to any of claims 1 to 2, wherein the previously created isolated application execution environments were used to execute other applications.

4. The method according to any of claims 1 to 3, wherein modifying the set of constraints includes processing each condition for the correct execution of the application using constraint generation rules.

5. The method according to claim 4, wherein constraint generating rules are created using machine learning algorithms and automated processing of large-scale data sets.

6. A system for modifying isolated application execution environments, comprising:
at least one processor configured to:
identify an at least partially encrypted and/or at least partially obfuscated application;
analyze parameters and resources of the application to determine conditions for launching the application, wherein the conditions include resources or parameters of the application that are necessary to launch the application in an isolated application execution environment;
generate, based on the determined conditions, a set of constraints for the isolated application execution environment using constraint generating rules from a rules database, the constraint generating rules comprising changes in settings and/or characteristics of the isolated application execution environment that restrict operations according to the determined conditions;
search for an isolated application execution environment that most closely matches the generated set of constraints among previously created isolated application execution environments;
launch the application in the matched isolated application execution environment;
determine if the application executes incorrectly in the isolated application execution environment due to the determined conditions being insufficient for launching the application;
based on a determination that the application executes incorrectly,
stop the execution of the application;
analyze the application's activity, parameters, and/or resources to identify the conditions for the correct execution of the application;
modify the set of constraints of the isolated application execution environment based on the identified conditions for correct execution to facilitate correct execution of the application; and
re-launch the application in the modified isolated application execution environment; and
check at least the encrypted part and/or at least the obfuscated part of the application for a presence of a malicious code in the modified isolated application execution environment.

7. The system of claim 6, wherein incorrect execution of the application includes: application terminates with an error, application stops responding to the system, and/or application begins to restart on its own.

8. The system of claim 6, wherein the previously created execution environments were used to execute other applications.

9. The system of claim 6, wherein modifying the set of constraints includes processing each condition for the correct execution of the application using constraint generation rules.

10. The system of claim 9, wherein the constraint generating rules are created using machine learning algorithms and automated processing of large-scale data sets.

11. A non-transitory computer readable medium storing thereon computer executable instructions for modifying isolated application execution environments, including instructions for:
identifying an at least partially encrypted and/or at least partially obfuscated application;
analyzing parameters and resources of the application to determine conditions for launching the application, wherein the conditions include resources or parameters of the application that are necessary to launch the application in an isolated application execution environment;
generating, based on the determined conditions, a set of constraints for the isolated application execution environment using constraint generating rules from a rules database, the constraint generating rules comprising changes in settings and/or characteristics of the isolated application execution environment that restrict operations according to the determined conditions;
searching for an isolated application execution environment that most closely matches the generated set of constraints among previously created isolated application execution environments;
launching the application in the matched isolated application execution environment;
determining if the application executes incorrectly in the isolated application execution environment due to the determined conditions being insufficient for launching the application;
based on a determination that the application executes incorrectly,
stopping the execution of the application;
analyzing the application's activity, parameters, and/or resources to identify the conditions for the correct execution of the application;
modifying the set of constraints of the isolated application execution environment based on the identified conditions for correct execution to facilitate correct execution of the application; and
re-launching the application in the modified isolated application execution environment; and
checking at least the encrypted part and/or at least the obfuscated part of the application for a presence of a malicious code in the modified isolated application execution environment.

12. The non-transitory computer readable medium of claim 11, wherein incorrect execution of the application includes: application terminates with an error, application stops responding to the system, and/or application begins to restart on its own.

13. The non-transitory computer readable medium of claim 11, wherein the previously created execution environments were used to execute other applications.

14. The non-transitory computer readable medium of claim 11, wherein modifying the set of constraints includes processing each condition for the correct execution of the application using constraint generation rules.

15. The non-transitory computer readable medium of claim 14, wherein the constraint generating rules are created using machine learning algorithms and automated processing of large-scale data sets.

## Patentansprüche

1. Verfahren (200) zum Modifizieren von isolierten Anwendungsausführungsumgebungen, wobei das Verfahren umfasst:
Identifizieren (211) einer zumindest teilweise verschlüsselten und/oder zumindest teilweise verschleierten Anwendung;
Analysieren von Parametern und Ressourcen der Anwendung, um Bedingungen für das Starten der Anwendung zu bestimmen, wobei die Bedingungen Ressourcen oder Parameter der Anwendung enthalten, die erforderlich sind, um die Anwendung in einer isolierten Anwendungsausführungsumgebung zu starten;
Erzeugen (212), basierend auf den bestimmten Bedingungen, eines Satzes von Einschränkungen für die isolierte Anwendungsausführungsumgebung unter Verwendung von Einschränkungserzeugungsregeln aus einer Regeldatenbank, wobei die Einschränkungserzeugungsregeln Änderungen von Einstellungen und/oder Eigenschaften der isolierten Anwendungsausführungsumgebung umfassen, die Vorgänge gemäß den bestimmten Bedingungen einschränken;
Suchen nach einer isolierten Anwendungsausführungsumgebung, die am genauesten mit dem erzeugten Satz von Einschränkungen übereinstimmt, unter zuvor erzeugten isolierten Anwendungsausführungsumgebungen;
Starten (213) der Anwendung in der übereinstimmenden isolierten Anwendungsausführungsumgebung;
Bestimmen, ob die Anwendung in der isolierten Anwendungsausführungsumgebung fehlerhaft ausgeführt wird, weil die bestimmten Bedingungen für das Starten der Anwendung unzureichend sind;
basierend auf einer Bestimmung, dass die Anwendung fehlerhaft ausgeführt wird, Stoppen (215) der Ausführung der Anwendung;
Analysieren der Aktivität, der Parameter und/oder der Ressourcen der Anwendung, um die Bedingungen für die korrekte Ausführung der Anwendung zu identifizieren;
Modifizieren des Satzes von Einschränkungen der isolierten Anwendungsausführungsumgebung basierend auf den identifizierten Bedingungen für eine korrekte Ausführung, um die korrekte Ausführung der Anwendung zu erleichtern; und
erneutes Starten (213) der Anwendung in der modifizierten isolierten Anwendungsausführungsumgebung;
Prüfen (216) zumindest des verschlüsselten Teils und/oder zumindest des verschleierten Teils der Anwendung auf das Vorhandensein eines schädlichen Codes in der modifizierten isolierten Anwendungsausführungsumgebung.

2. Verfahren nach Anspruch 1, wobei eine fehlerhafte Ausführung der Anwendung umfasst:
Anwendung bricht mit einem Fehler ab, Anwendung reagiert nicht mehr auf das System und/oder Anwendung beginnt von selbst neu zu starten.

3. Verfahren nach einem der Ansprüche 1 bis 2, wobei die zuvor erzeugten isolierten Anwendungsausführungsumgebungen verwendet wurden, um andere Anwendungen auszuführen.

4. Verfahren nach einem der Ansprüche 1 bis 3, wobei das Modifizieren des Satzes von Einschränkungen das Verarbeiten jeder Bedingung für die korrekte Ausführung der Anwendung unter Verwendung von Einschränkungserzeugungsregeln umfasst.

5. Verfahren nach Anspruch 4, wobei Einschränkungserzeugungsregeln unter Verwendung von Algorithmen für maschinelles Lernen und automatisierter Verarbeitung von Datensätzen in großem Maßstab erzeugt werden.

6. System zum Modifizieren von isolierten Anwendungsausführungsumgebungen, umfassend:
mindestens einen Prozessor, der konfiguriert ist zum:
Identifizieren einer zumindest teilweise verschlüsselten und/oder zumindest teilweise verschleierten Anwendung;
Analysieren von Parametern und Ressourcen der Anwendung, um Bedingungen für das Starten der Anwendung zu bestimmen, wobei die Bedingungen Ressourcen oder Parameter der Anwendung enthalten, die erforderlich sind, um die Anwendung in einer isolierten Anwendungsausführungsumgebung zu starten;
Erzeugen, basierend auf den bestimmten Bedingungen, eines Satzes von Einschränkungen für die isolierte Anwendungsausführungsumgebung unter Verwendung von Einschränkungserzeugungsregeln aus einer Regeldatenbank, wobei die Einschränkungserzeugungsregeln Änderungen von Einstellungen und/oder Eigenschaften der isolierten Anwendungsausführungsumgebung umfassen, die Vorgänge gemäß den bestimmten Bedingungen einschränken;
Suchen nach einer isolierten Anwendungsausführungsumgebung, die am genauesten mit dem erzeugten Satz von Einschränkungen übereinstimmt, unter zuvor erzeugten isolierten Anwendungsausführungsumgebungen;
Starten der Anwendung in der übereinstimmenden isolierten Anwendungsausführungsumgebung;
Bestimmen, ob die Anwendung in der isolierten Anwendungsausführungsumgebung fehlerhaft ausgeführt wird, weil die bestimmten Bedingungen für das Starten der Anwendung unzureichend sind;
basierend auf einer Bestimmung, dass die Anwendung fehlerhaft ausgeführt wird,
Stoppen der Ausführung der Anwendung;
Analysieren der Aktivität, der Parameter und/oder der Ressourcen der Anwendung, um die Bedingungen für die korrekte Ausführung der Anwendung zu identifizieren;
Modifizieren des Satzes von Einschränkungen der isolierten Anwendungsausführungsumgebung basierend auf den identifizierten Bedingungen für eine korrekte Ausführung, um die korrekte Ausführung der Anwendung zu erleichtern; und
erneutes Starten der Anwendung in der modifizierten isolierten Anwendungsausführungsumgebung; und
Prüfen zumindest des verschlüsselten Teils und/oder zumindest des verschleierten Teils der Anwendung auf das Vorhandensein eines schädlichen Codes in der modifizierten isolierten Anwendungsausführungsumgebung.

7. System nach Anspruch 6, wobei eine fehlerhafte Ausführung der Anwendung umfasst: Anwendung bricht mit einem Fehler ab, Anwendung reagiert nicht mehr auf das System und/oder Anwendung beginnt von selbst neu zu starten.

8. System nach Anspruch 6, wobei die zuvor erzeugten Ausführungsumgebungen verwendet wurden, um andere Anwendungen auszuführen.

9. System nach Anspruch 6, wobei das Modifizieren des Satzes von Einschränkungen das Verarbeiten jeder Bedingung für die korrekte Ausführung der Anwendung unter Verwendung von Einschränkungserzeugungsregeln umfasst.

10. System nach Anspruch 9, wobei die Einschränkungserzeugungsregeln unter Verwendung von Algorithmen für maschinelles Lernen und automatisierter Verarbeitung von Datensätzen in großem Maßstab erzeugt werden.

11. Nichtflüchtiges computerlesbares Medium, auf dem computerausführbare Anweisungen zum Modifizieren von isolierten Anwendungsausführungsumgebungen gespeichert sind, umfassend Anweisungen zum:
Identifizieren einer zumindest teilweise verschlüsselten und/oder zumindest teilweise verschleierten Anwendung;
Analysieren von Parametern und Ressourcen der Anwendung, um Bedingungen für das Starten der Anwendung zu bestimmen, wobei die Bedingungen Ressourcen oder Parameter der Anwendung enthalten, die erforderlich sind, um die Anwendung in einer isolierten Anwendungsausführungsumgebung zu starten,
Erzeugen, basierend auf den bestimmten Bedingungen, eines Satzes von Einschränkungen für die isolierte Anwendungsausführungsumgebung unter Verwendung von Einschränkungserzeugungsregeln aus einer Regeldatenbank, wobei die Einschränkungserzeugungsregeln Änderungen von Einstellungen und/oder Eigenschaften der isolierten Anwendungsausführungsumgebung umfassen, die Vorgänge gemäß den bestimmten Bedingungen einschränken;
Suchen nach einer isolierten Anwendungsausführungsumgebung, die am genauesten mit dem erzeugten Satz von Einschränkungen übereinstimmt, unter zuvor erzeugten isolierten Anwendungsausführungsumgebungen;
Starten der Anwendung in der übereinstimmenden isolierten Anwendungsausführungsumgebung;
Bestimmen, ob die Anwendung in der isolierten Anwendungsausführungsumgebung fehlerhaft ausgeführt wird, weil die bestimmten Bedingungen für das Starten der Anwendung unzureichend sind;
basierend auf einer Bestimmung, dass die Anwendung fehlerhaft ausgeführt wird,
Stoppen der Ausführung der Anwendung;
Analysieren der Aktivität, der Parameter und/oder der Ressourcen der Anwendung, um die Bedingungen für die korrekte Ausführung der Anwendung zu identifizieren;
Modifizieren des Satzes von Einschränkungen der isolierten Anwendungsausführungsumgebung basierend auf den identifizierten Bedingungen für eine korrekte Ausführung, um die korrekte Ausführung der Anwendung zu erleichtern; und
erneutes Starten der Anwendung in der modifizierten isolierten Anwendungsausführungsumgebung; und
Prüfen zumindest des verschlüsselten Teils und/oder zumindest des verschleierten Teils der Anwendung auf das Vorhandensein eines schädlichen Codes in der modifizierten isolierten Anwendungsausführungsumgebung.

12. Nichtflüchtiges computerlesbares Medium nach Anspruch 11, wobei eine fehlerhafte Ausführung der Anwendung umfasst: Anwendung bricht mit einem Fehler ab, Anwendung reagiert nicht mehr auf das System und/oder Anwendung beginnt von selbst neu zu starten.

13. Nichtflüchtiges computerlesbares Medium nach Anspruch 11, wobei die zuvor erzeugten Ausführungsumgebungen verwendet wurden, um andere Anwendungen auszuführen.

14. Nichtflüchtiges computerlesbares Medium nach Anspruch 11, wobei das Modifizieren des Satzes von Einschränkungen das Verarbeiten jeder Bedingung für die korrekte Ausführung der Anwendung unter Verwendung von Einschränkungserzeugungsregeln umfasst.

15. Nichtflüchtiges computerlesbares Medium nach Anspruch 14, wobei die Einschränkungserzeugungsregeln unter Verwendung von Algorithmen für maschinelles Lernen und automatisierter Verarbeitung von Datensätzen in großem Maßstab erzeugt werden.

## Revendications

1. Procédé (200) de modification d'environnements d'exécution d'application isolés, le procédé comprenant :
l'identification (211) d'une application au moins partiellement chiffrée et/ou au moins partiellement offusquée ;
l'analyse de paramètres et de ressources de l'application pour déterminer des conditions de lancement de l'application, dans lequel les conditions incluent des ressources ou des paramètres de l'application qui sont nécessaires pour lancer l'application dans un environnement d'exécution d'application isolé ;
la génération (212), sur la base des conditions déterminées, d'un ensemble de contraintes pour l'environnement d'exécution d'application isolé à l'aide de règles de génération de contraintes provenant d'une base de données de règles, les règles de génération de contraintes comprenant des modifications des paramètres et/ou des caractéristiques de l'environnement d'exécution d'application isolé qui restreignent des opérations selon les conditions déterminées ;
la recherche d'un environnement d'exécution d'application isolé qui correspond le plus fidèlement à l'ensemble de contraintes généré parmi des environnements d'exécution d'application isolés précédemment créés ;
le lancement (213) de l'application dans l'environnement d'exécution d'application isolé correspondant ;
la détermination du fait que l'application s'exécute de manière incorrecte ou non dans l'environnement d'exécution d'application isolé en raison de l'insuffisance des conditions déterminées pour lancer l'application ;
sur la base d'une détermination selon laquelle l'application s'exécute de manière incorrecte, l'arrêt (215) de l'exécution de l'application ;
l'analyse de l'activité, des paramètres et/ou des ressources de l'application pour identifier les conditions pour l'exécution correcte de l'application ;
la modification de l'ensemble de contraintes de l'environnement d'exécution d'application isolé sur la base des conditions identifiées pour une exécution correcte afin de faciliter l'exécution correcte de l'application ; et
le relancement (213) de l'application dans l'environnement d'exécution d'application isolé modifié ;
la vérification (216) d'au moins la partie chiffrée et/ou d'au moins la partie offusquée de l'application quant à la présence d'un code malveillant dans l'environnement d'exécution d'application isolé modifié.

2. Procédé selon la revendication 1, dans lequel l'exécution incorrecte de l'application inclut :
le fait que l'application se termine par une erreur, que l'application cesse de répondre au système, et/ou que l'application commence à redémarrer d'elle-même.

3. Procédé selon l'une quelconque des revendications 1 à 2, dans lequel les environnements d'exécution d'application isolés précédemment créés ont été utilisés pour exécuter d'autres applications.

4. Procédé selon l'une quelconque des revendications 1 à 3, dans lequel la modification de l'ensemble de contraintes inclut le traitement de chaque condition pour l'exécution correcte de l'application à l'aide de règles de génération de contraintes.

5. Procédé selon la revendication 4, dans lequel les règles de génération de contraintes sont créées à l'aide d'algorithmes d'apprentissage automatique et d'un traitement automatisé d'ensembles de données à grande échelle.

6. Système de modification d'environnements d'exécution d'application isolés, comprenant :
au moins un processeur configuré pour :
identifier une application au moins partiellement chiffrée et/ou au moins partiellement offusquée ;
analyser des paramètres et de ressources de l'application pour déterminer des conditions de lancement de l'application, dans lequel les conditions incluent des ressources ou des paramètres de l'application qui sont nécessaires pour lancer l'application dans un environnement d'exécution d'application isolé ;
générer, sur la base des conditions déterminées, un ensemble de contraintes pour l'environnement d'exécution d'application isolé à l'aide de règles de génération de contraintes provenant d'une base de données de règles, les règles de génération de contraintes comprenant des modifications des paramètres et/ou des caractéristiques de l'environnement d'exécution d'application isolé qui restreignent des opérations selon les conditions déterminées ;
rechercher un environnement d'exécution d'application isolé qui correspond le plus fidèlement à l'ensemble de contraintes généré parmi des environnements d'exécution d'application isolés précédemment créés ;
lancer l'application dans l'environnement d'exécution d'application isolé correspondant ;
déterminer si l'application s'exécute de manière incorrecte dans l'environnement d'exécution d'application isolé en raison de l'insuffisance des conditions déterminées pour lancer l'application ;
sur la base d'une détermination selon laquelle l'application s'exécute de manière incorrecte,
arrêter l'exécution de l'application ;
analyser l'activité, des paramètres et/ou des ressources de l'application pour identifier les conditions pour l'exécution correcte de l'application ;
modifier l'ensemble de contraintes de l'environnement d'exécution d'application isolé sur la base des conditions identifiées pour une exécution correcte afin de faciliter l'exécution correcte de l'application ; et
relancer l'application dans l'environnement d'exécution d'application isolé modifié ; et
vérifier au moins la partie chiffrée et/ou au moins la partie offusquée de l'application quant à la présence d'un code malveillant dans l'environnement d'exécution d'application isolé modifié.

7. Système selon la revendication 6, dans lequel l'exécution incorrecte de l'application inclut : le fait que l'application se termine par une erreur, que l'application cesse de répondre au système, et/ou que l'application commence à redémarrer d'elle-même.

8. Système selon la revendication 6, dans lequel les environnements d'exécution précédemment créés ont été utilisés pour exécuter d'autres applications.

9. Système selon la revendication 6, dans lequel la modification de l'ensemble de contraintes inclut le traitement de chaque condition pour l'exécution correcte de l'application à l'aide de règles de génération de contraintes.

10. Système selon la revendication 9, dans lequel les règles de génération de contraintes sont créées à l'aide d'algorithmes d'apprentissage automatique et d'un traitement automatisé d'ensembles de données à grande échelle.

11. Support lisible par ordinateur non transitoire stockant sur celui-ci des instructions exécutables par ordinateur pour modifier des environnements d'exécution d'application isolés, incluant des instructions pour :
l'identification d'une application au moins partiellement chiffrée et/ou au moins partiellement offusquée ;
l'analyse de paramètres et de ressources de l'application pour déterminer des conditions de lancement de l'application, dans lequel les conditions incluent des ressources ou des paramètres de l'application qui sont nécessaires pour lancer l'application dans un environnement d'exécution d'application isolé,
la génération, sur la base des conditions déterminées, d'un ensemble de contraintes pour l'environnement d'exécution d'application isolé à l'aide de règles de génération de contraintes provenant d'une base de données de règles, les règles de génération de contraintes comprenant des modifications des paramètres et/ou des caractéristiques de l'environnement d'exécution d'application isolé qui restreignent des opérations selon les conditions déterminées ;
la recherche d'un environnement d'exécution d'application isolé qui correspond le plus fidèlement à l'ensemble de contraintes généré parmi des environnements d'exécution d'application isolés précédemment créés ;
le lancement de l'application dans l'environnement d'exécution d'application isolé correspondant ;
la détermination du fait que l'application s'exécute de manière incorrecte ou non dans l'environnement d'exécution d'application isolé en raison de l'insuffisance des conditions déterminées pour lancer l'application ;
sur la base d'une détermination selon laquelle l'application s'exécute de manière incorrecte,
l'arrêt de l'exécution de l'application ;
l'analyse de l'activité, des paramètres et/ou des ressources de l'application pour identifier les conditions pour l'exécution correcte de l'application ;
la modification de l'ensemble de contraintes de l'environnement d'exécution d'application isolé sur la base des conditions identifiées pour une exécution correcte afin de faciliter l'exécution correcte de l'application ; et
le relancement de l'application dans l'environnement d'exécution d'application isolé modifié ; et
la vérification d'au moins la partie chiffrée et/ou d'au moins la partie offusquée de l'application quant à la présence d'un code malveillant dans l'environnement d'exécution d'application isolé modifié.

12. Support lisible par ordinateur non transitoire selon la revendication 11, dans lequel l'exécution incorrecte de l'application inclut : le fait que l'application se termine par une erreur, que l'application cesse de répondre au système, et/ou que l'application commence à redémarrer d'elle-même.

13. Support lisible par ordinateur non transitoire selon la revendication 11, dans lequel les environnements d'exécution précédemment créés ont été utilisés pour exécuter d'autres applications.

14. Support lisible par ordinateur non transitoire selon la revendication 11, dans lequel la modification de l'ensemble de contraintes inclut le traitement de chaque condition pour l'exécution correcte de l'application à l'aide de règles de génération de contraintes.

15. Support lisible par ordinateur non transitoire selon la revendication 14, dans lequel les règles de génération de contraintes sont créées à l'aide d'algorithmes d'apprentissage automatique et d'un traitement automatisé d'ensembles de données à grande échelle.
